Europäisches Patentamt

European Patent Office

Office européen des brevets

(19)

(11) Publication number: **0 378 138**
**A2**

# EUROPEAN PATENT APPLICATION

(12)

(21) Application number: 90100275.8

(22) Date of filing: 08.01.90

(51) Int. Cl.⁵: **B29C 45/16, B29B 11/08**

(30) Priority: 13.01.89 US 297044

(43) Date of publication of application:
18.07.90 Bulletin 90/29

(84) Designated Contracting States:
AT BE CH DE DK ES FR GB GR IT LI LU NL SE

(71) Applicant: HUSKY INJECTION MOLDING
SYSTEMS LTD.
500 Queen Street South
Bolton Ontario L7E 5S5(CA)

(72) Inventor: Brown, Paul
RR No. 2
Orangeville, Ontario, L9W 2Y9(CA)

(74) Representative: Weiss, Peter
Schlachthausstrasse 1 Postfach 466
D-7700 Singen a.H.(DE)

(54) **Multilayer nozzle with equalized flow.**

(57) A nozzle structure is disclosed useful to service individual cavities of a multicavity mold for molding multilayered articles or preforms where the nozzles include a plurality of flow paths (21, 24) for advancing material (22, 26) from external sources through predetermined paths to all cavities, simultaneously. Certain of the flow paths include reservoirs (27) incorporating choke elements for insuring that material exiting from the reservoirs advances into the mold cavities along a uniform front where the front is generally perpendicular to the longitudinal axis of the nozzle.

_FIG-4_

## BACKGROUND OF THE INVENTION

The present invention relates to injection molding of multilayer preforms and containers.

Usually two or more materials are injected simultaneously, sequentially or in various combinations and permutations of simultaneous and sequential injection to create a multilayered wall structure.

Typical nozzles that are utilized in such injection procedures involve the number of concentric, radially spaced sleeves providing tubular or annular paths for material flowing to a nozzle gate or orifice where the gate or nozzle is common to all paths.

That is, a central primary path leads generally straight through the nozzle to the orifice while other secondary paths converge at the nozzle and join the material advancing along the primary path in a tangential manner.

When introducing materials to the nozzle from an external source, such as an extruder or similar device, frequently, there is difficulty in insuring that material advancing in tangential, secondary flow paths will be uniformly distributed about and along the material advancing in a generally straight through or primary flow path.

That is, the material advancing to the nozzle orifice tangentially through a tapered annulus will not be distributed or advanced equally about the periphery of the material advancing in the primary flow path.

Thus, the front of the material advancing along a secondary flow path does not extend a uniform distance from the nozzle orifice as one observes the front from point to point about the periphery or circumference of the front.

Ideally, the circular flow of the material advanced in secondary flow paths to a terminal point should define a plane which is perpendicular, generally, to the straight through or primary path.

Unequal or irregular advance about the periphery or circumference of materials flowing through secondary flow oaths in a given nozzle is particularly bothersome when molding multilayered preforms or containers in multicavity molds (2 to 32 or more cavities) where each cavity is serviced by a mating nozzle and the nozzles are, in turns supplied with molding materials from external sources, a single source supplying a specific flow path in each nozzle collectively and simultaneously.

At this juncture, it is well to make a distinction between an extrusion process and an injection molding process for making articles.

The problem discussed above is not critical in coextrusion because the operation is continuous.

Unequal or irregular advance of a secondary material occurs, if at all, at start up and the flow becomes equalized as the continuity of the extrusion process continues. The problem is solved in an extrusion process by merely eliminating the start up portion of a coextrusion.

In contrast, an injection molding operation is discontinuous so that distorted, unequal distribution of materials advancing along secondary flow paths occurs upon each injection shot. Obviously, such an occurrence is undesirable.

## SUMMARY OF THE INVENTION

Therefore, it is a primary feature of the present invention to provide a nozzle structure useful in injection molding of multilayered preforms and containers in multicavity molds.

A further feature of the invention is the provision of a method of introducing a plurality of moldable materials into a multicavity mold to create a multilayered wall structure with assurance that all materials advance frontally in uniform fashion.

It is a further feature of the invention to provide a recess in a secondary flow path adjacent the nozzle orifice serving as a reservoir for supplying material advancing in a secondary flow path insuring equal and uniform distribution about the circumference of material flowing or advancing in a primary flow path so that all material progressing along said secondary flow path reaches a desired terminal point in uniform fashion.

It is a further feature of the present invention to provide a plurality of annular recesses, one for each secondary flow path insuring uniform and equal advance of all materials advancing through secondary flow paths.

A further feature of the present invention is the provision in a secondary flow path of a restriction or choke communicating with said reservoir operative to create a back pressure in said reservoir further facilitating uniform flow of material advancing in said secondary path.

A method of injection molding preforms and containers having multilayered wall structure in a multicavity mold embracing principles of the present invention may comprise the steps of providing a nozzle for each mold cavity, advancing a first material through all nozzle orifices along a straight through path to a plurality of mold cavities simultaneously from a first source, creating at least one reservoir having a choke within each nozzle, accumulating a second material in each said reservoir from a second source and thereafter discharging said second material from said reservoirs through said choke and through said nozzle orifice directly to all mold cavities simultaneously whereby each second material advances to a terminal point uniformly creating a layer in each mold cavity defining a uniform front, said front lying a plane generally perpendicular to said straight through path.

A nozzle structure embracing certain other principles of the present invention and operable to practice the process steps thereof may comprise a plurality of concentric sleeves including a central flow path and at least one tubular flow path where all paths converge at a nozzle orifice, an annular recess or bulge formed in a sleeve adjacent said orifice providing a reservoir for molding material, said nozzle being further formed with a restriction defining a choke adjacent said reservoir to develop a back pressure in material flowing through said secondary flow path thus insuring uniform flow and uniform advance of material exiting said secondary flow path.

Other features and advantages of the present invention will become more apparent from an examination of the succeeding specification when read in conjunction with the appended drawings, in which:

## BRIEF DESCRIPTION OF THE DRAWINGS

Figure 1 is a cross-sectional view of a typical prior art multilayer nozzle;

Figure 2 shows schematically unequal distribution of molding material flowing along a secondary flow path;

Figure 3 is a sectional view of a multilayer parison or container further evidencing unequal distribution of an intermediate layer which is typical of the problem encountered in multicavity molds prior to the present invention;

Figure 4 is a sectional view similar to Figure 1 showing the improved nozzle structure of the present invention;

Figure 4A is an enlarged view of a portion of Figure 4;

Figure 5 shows schematically uniform advance of material flowing along a secondary flow path terminating at a front which lies in a plane which is generally perpendicular to the longitudinal axis of the primary flow path;

Figure 6, in contrast to Figure 3, illustrates further the uniformity of an intermediate layer of a parison or container terminating uniformly at a predetermined point;

Figures 7 and 8 are similar to Figures 4 and 5 illustrating an alternative embodiment involving a primary flow path and two secondary flow paths. Figure 8 shows, schematically, the uniform advance of the three materials; and,

Figure 9 is a schematic layout of a multicavity mold with individual nozzles each supplied with molding material from a plurality of external sources.

## DETAILED DESCRIPTION

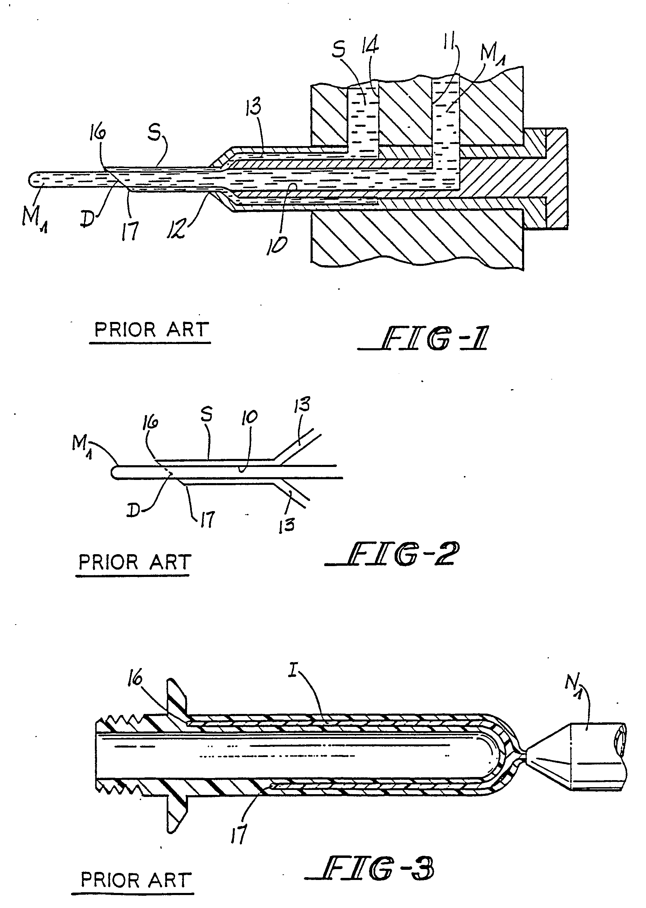

Referring now in detail to Figures 1,2 and 3, a prior art nozzle structure $N_1$ is disclosed in which a primary channel or flow path 10 connected to a supply channel 11 provides a first material $M_1$ to nozzle gate or orifice 12. A second annular flow path 13, supplied by a second material S through supply channel 14 is shown converging at the orifice 12 and exiting the nozzle with unequal distribution of the second material, as indicated by the diagonal D in Figures 1 and 2.

As is further apparent in Figure 2, the material S as it flows along, meets with less flow resistance on the side of the orifice near the supply channel 14 and thus flows to a more distant point 16 while the material opposite the supply channel 14 flows because of the greater resistance to flow to a less distant point indicated by the reference numeral 17 creating a biased front.

Figure 3 shows a multilayered wall structure resulting from such unequal flow in that the intermediate layer I is biased.

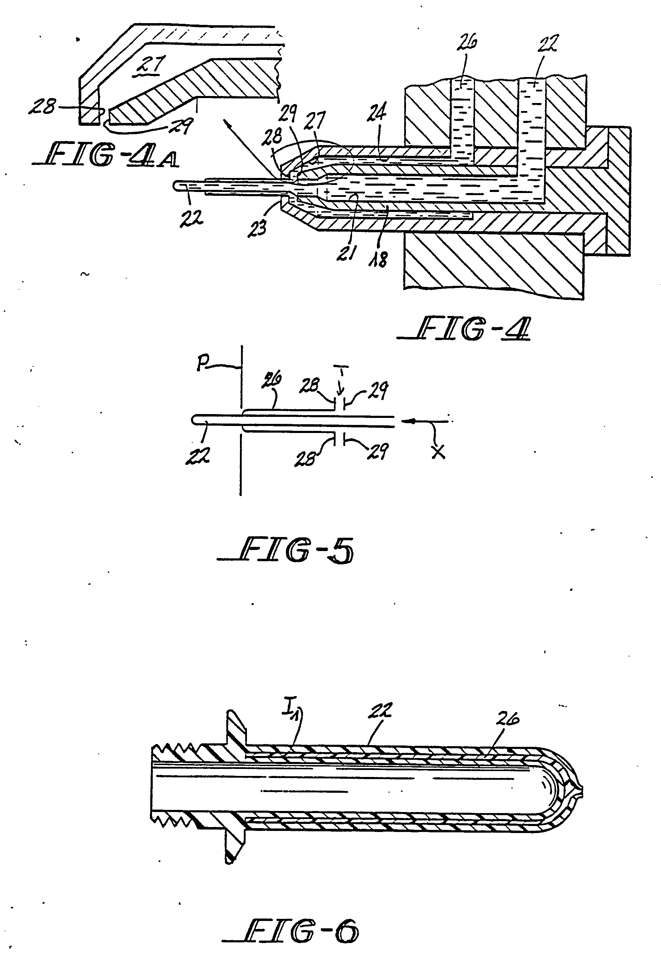

Figures 4, 5 and 6 show a primary flow path 21 supplied with primary molding material 22 emerging from orifice 23. A secondary flow path 24 for secondary material 26 advances circumferentially about sleeve 18 to an annular recess providing a reservoir 27 for secondary material. A restriction or choke defining a pair of opposed shoulders 28 and 29 adjacent orifice 23 provides an outlet for secondary material supplied from reservoir 27.

The restriction developed by shoulders 28 and 29 effects a third inwardly directed flow path T (Figure 5) and is operable to effect a throttling action to create a back pressure in the secondary material retained in the reservoir 27 insuring uniform advance about the periphery or circumference of the primary material to create ultimately a uniform front lying in a plane p which is generally perpendicular to the longitudinal axis X of the primary flow path.

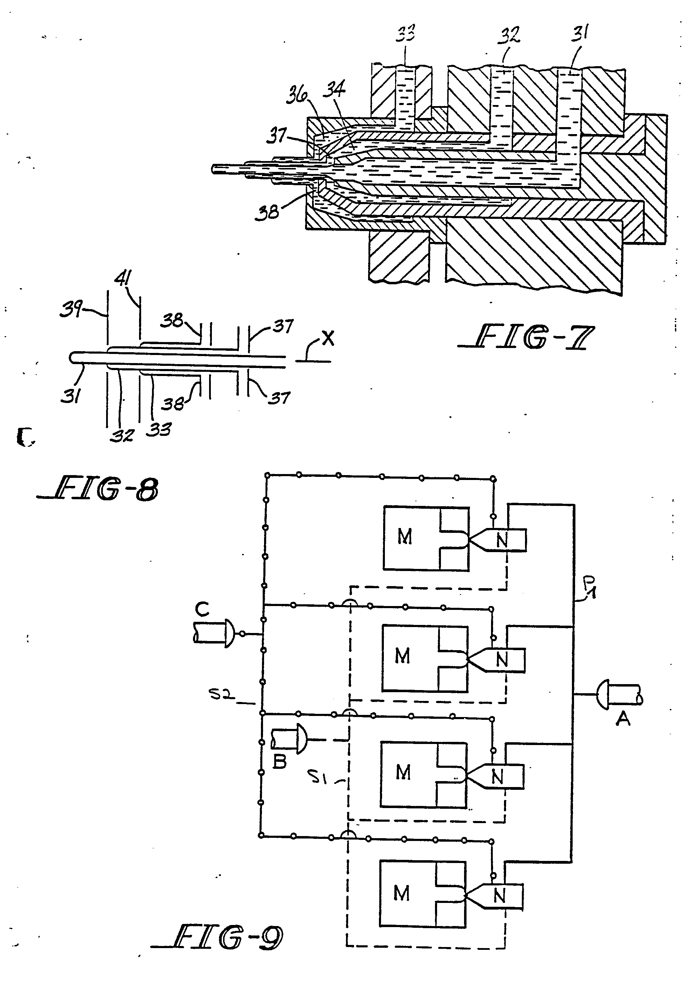

In contrast to Figure 3, Figure 6 is an indication of the uniformity of the front of intermediate layer $I_1$ generated in a mold cavity fed by a nozzle having the structure disclosed in Figure 4.

Figures 7 and 8 show an alternative embodiment of the nozzle structure and the resulting layered side wall wherein a primary material 31 flows along a primary central flow path and secondary materials 32 and 33, respectively, each having a recess defining material reservoirs 34 and 36 communicating with back pressure restrictions or chokes 37 and 38 operable to create ultimately a plurality of uniform fronts 39 and 41, each of which is generally perpendicular to the longitudinal axis X of the primary flow path.

Figure 9 is a schematic illustration of a typical multicavity mold layout in which mold cavities M are serviced by individual nozzles N where each nozzle contains a plurality of flow paths. i.e. a primary flow path $P_1$ and two secondary flow paths S1 and S2 connected to external material sources defining extruders or other suitable devices A, B and C arranged to supply predetermined flow paths in each nozzle simultaneously.

For example, source unit A supplies all nozzles N simultaneously servicing a primary flow path $P_1$. Thereafter supply units B and C are operable to supply mating flow paths S1 and S2, respectively, in each nozzle, individually, simultaneously and collectively.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its spirit and scope as defined by the claims.

**Claims**

1. In the art of injection molding two or more materials to create a plurality of multilayered articles in a multicavity mold (M) where each cavity has a nozzle (N) individual thereto, a method of insuring uniform distribution of individual layers in each mold cavity comprising the steps of:
advancing a first material (22,31) through each nozzle orifice (23) along a first path (21) to all mold cavities (M), simultaneously,
creating at least one reservoir (27,34,36) within each said nozzle (N),
supplying each said reservoir with a second material (26,32,33) via a second path (24), accumulating said second material in said reservoir (27,34,36), and
thereafter discharging said second material (26,32,33) from each said reservoir (27,34,36) through said nozzle orifice (23) to all mold cavities (M) simultaneously whereby said second material (26,32,33) advances uniformly creating a layer in each mold cavity (M) having a uniform front (39,41),
said front (39,41) defining a plane (P) generally perpendicular to said straight through path.

2. The method of claim 1 plus the step of restricting or throttling the discharge of the second material (26,32,33) from said reservoir (27,34,36) thereby creating back pressure in the reservoir (27,34,36).

3. The method of claim 1 or 2 plus the step of creating the reservoir (27,34,36) by forming an enlarged annular bulge or recess in each said second path (24) adjacent said nozzle orifice (23) and surrounding said first path (21).

4. The method of one of the claims 1-3 in which the second material (26,32,33) creates an intermediate layer ($I_1$) between layers of said first material (22,31) in each mold cavity (M) where the intermediate layer ($I_1$) develops a front lying in a plane (P) which is generally perpendicular to the path traversed by the first material (22,31).

5. A nozzle structure useful to supply a plurality of materials individually and sequentially to a multicavity mold (M) where each cavity includes a nozzle (N) individual thereto comprising:
a plurality of concentric sleeves including a first flow path (21) and at least one secondary flow path (24) concentric with said first path (21),
said paths (21,24) converging collectively at the nozzle orifice (23), and
an annular recess or bulge formed in said secondary flow path (24) adjacent said orifice (23) to define a reservoir (27,34,36) whereby said nozzle (N) is operative to insure uniform flow and uniform advance of material (26,32,33) exiting nozzle (N) via said secondary flow path (24).

6. The nozzle of claim 5 in which the secondary flow path (24) includes a choke means (28,29,37,38) for creating a back pressure in said reservoir (27,34,36).

7. The nozzle of claim 6 in which the choke means defines a pair of opposed shoulders (28,29) forming an annular outlet from said reservoir (27,34,36).

8. The nozzle of claim 6 or 7 in which said choke means (28,29,37,38) creates a third inwardly directed flow path (T) which is generally perpendicular to said first flow path (21).

PRIOR ART      _FIG-1_

PRIOR ART      _FIG-2_

PRIOR ART      _FIG-3_

FIG-4A

FIG-4

FIG-5

FIG-6

FIG-7

FIG-8

FIG-9